**Europäisches Patentamt**

**European Patent Office**

**Office européen des brevets**

(19)

(11) **EP 1 037 470 A1**

(12) **DEMANDE DE BREVET EUROPEEN**

(43) Date de publication:
**20.09.2000 Bulletin 2000/38**

(51) Int Cl.⁷: **H04N 7/30**

(21) Numéro de dépôt: **00400688.8**

(22) Date de dépôt: **13.03.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **18.03.1999 FR 9903371**

(71) Demandeur: **ALCATEL**
**75008 Paris (FR)**

(72) Inventeur: **Falzon, Frédéric**
**06100 Nice (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Dispositif de régulation en débit ou en qualité d'un compresseur de données numériques, notamment d'images**

(57)     Dispositif de traitement pour la transmission de données numériques, notamment de données images, dans un canal de transmission, comportant :

•     Un moyen de compression de ces données, composé d'un décorrélateur, d'un quantificateur et d'un codeur,

•     Un moyen de régulation (R) possédant comme entrée des données décorrélées provenant du décorrélateur et une consigne, et fournissant au quantificateur un paramètre de quantification.

**FIG. 4**

EP 1 037 470 A1

**Description**

La présente invention concerne un dispositif de compression de données localisé entre un capteur et un organe de transmission. L'invention s'applique particulièrement bien aux satellites d'observation qui font l'acquisition de données images puis les transmettent vers une station au sol à travers un canal de radio transmission dont une des caractéristiques est de ne pouvoir véhiculer des informations qu'à débit constant.

Le volume d'information acquis par le capteur est, d'une façon générale, supérieur au volume d'information que peut transmettre le canal de transmission. Cela est notamment vrai pour les satellites d'observation du fait de l'accroissement du nombre et de la résolution des capteurs embarqués. Conséquemment, il est nécessaire d'avoir recours à des procédés de compression de données qui permettent de diminuer la quantité d'information à transmettre pour un même volume d'information acquis par le capteur.

Toutefois, en raison de la nature même des procédés de compression, le débit de sortie du compresseur est directement proportionnel à l'entropie du signal d'entrée. Dans le cas général, donc, la quantité d'information à transmettre varie au cours du temps puisque les caractéristiques du signal d'entrée varient elles-mêmes avec le temps.

Afin d'optimiser l'utilisation du canal de transmission, il convient donc de minimiser ces fluctuations de débit en sortie du dispositif de compression en effectuant une régulation de débit.

Dans le cas où le canal de transmission nécessite un débit constant, cette régulation devient même primordiale.

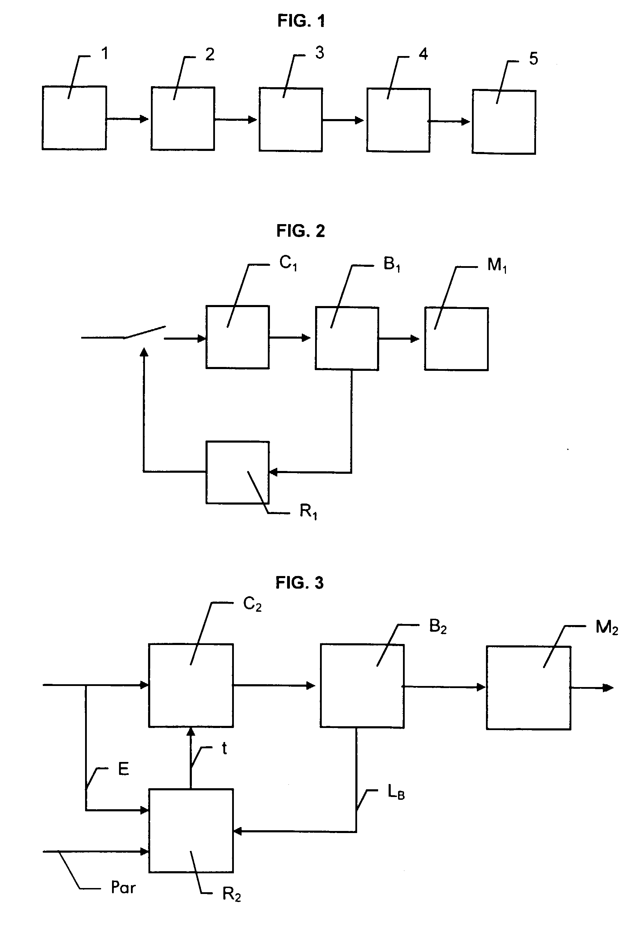

La figure 1 illustre de façon extrêmement schématique l'architecture d'un dispositif de traitement du signal dans le contexte de l'invention. Cette architecture prend la forme d'une chaîne de traitement le long de laquelle s'enchaînent plusieurs éléments.

L'élément référencé 1 est un capteur. Il peut par exemple s'agir d'une caméra optique ou infrarouge embarquée sur un satellite d'observation.

L'élément 2 est un moyen de compression.

L'élément 3 représente un moyen de régulation de débit.

L'élément 4 est une mémoire de masse qui sert d'antémémoire (ou mémoire cache) à l'élément de transmission 5. En effet, dans le cas d'un satellite d'observation, le canal de transmission n'est pas toujours disponible, notamment du fait de la limitation temporelle de la visibilité entre le satellite et les stations au sol. Il faut donc être en mesure de mémoriser les données pendant ces périodes de non-disponibilité du canal de transmission.

Le flux de données peut ou non passer par la mémoire de masse 4, en fonction de la disponibilité du canal de transmission.

Une première solution de mise en oeuvre du moyen de régulation est schématiquement illustrée par la figure 2.

Une mémoire tampon $B_1$ (pour buffer en anglais) est insérée entre le moyen de compression $C_1$ et la mémoire de masse $M_1$. Un moyen de régulation $R_1$ permet de détecter lorsque la mémoire tampon $B_1$ est pleine, et d'alors interrompre l'acquisition de données.

Afin de respecter la contrainte de débit constant sur le canal de transmission, des données non significatives sont transmises quand la mémoire $B_1$ est vide.

Ainsi, le débit sur le canal de transmission n'est pas optimal puisque des données non significatives sont transmises. Cette solution n'est donc pas satisfaisante.

Une seconde solution est divulguée par le brevet français 2 707 070, intitulé *Dispositif* de traitement d'images à compression à *débit* variable dont le titulaire est le Centre National d'Études Spatiales (CNES). Ce dispositif est schématiquement illustré par la figure 3.

Comme dans la solution précédente, une mémoire tampon $B_2$ est insérée entre le moyen de compression $C_2$ et la mémoire de masse $M_2$. Un moyen de régulation $R_2$ a connaissance du niveau $L_B$ de remplissage de la mémoire tampon $B_2$ et d'une estimation E de la quantité d'information contenue dans les données avant compression ou plus précisément de la complexité de ces données exprimée comme la somme de la valeur absolue des différences finies de l'image suivant ses lignes. En fonction de ces deux paramètres et d'une loi de régulation f, le moyen de régulation $R_2$ détermine un taux de compression t par $t = f(E, L_B)$.

Selon cette solution, lorsque la quantité d'information, mesurée par l'estimateur E, est importante pendant une certaine durée (le niveau $L_B$ devient alors important aussi), le taux de compression t est augmenté, pour éviter la saturation de la mémoire tampon $B_2$.

Cette solution possède de nombreux inconvénients :

- On observe en pratique que la qualité de la prédiction du taux de compression fournie par l'estimation E n'est pas constante dans l'image et la variabilité de cette qualité peut être importante. Il s'ensuit donc une variabilité aussi importante de la qualité de la régulation, qui doit alors être compensée par un dispositif (dénommé correction de biais dans cette solution de l'état de l'art) permettant de corriger a posteriori l'erreur de prédiction. Si ce dispositif n'est pas utilisé, alors la mémoire tampon peut devoir être de taille importante, ce qui peut engendrer un accroissement de la complexité de mise en oeuvre matérielle et du coût, notamment pour les systèmes embarqués.

- Elle met en oeuvre un grand nombre de paramètres (Par) sous la forme d'un réseau de droites de prédiction dont le nombre est proportionnel au nombre de bits sur lesquels sont codées les données d'entrée. Ces droites sont caractérisées chacune par les deux paramètres d'une équation affine. Tous ces paramètres sont déterminés de manière empirique, c'est à dire en réalisant un grand nombre de mesures de débit et de complexité en fonction du pas de quantification et en effectuant finalement une régression linéaire sur les nuages de points obtenus. La mise en oeuvre de cette méthode est donc assez lourde et peut être imprécise du fait, notamment, de l'obligation de limiter le nombre de droites obtenues, ce qui revient à limiter le nombre de pas de quantification possibles pour la régulation.
- Enfin, d'un point de vue pratique la méthode peut être difficile à mettre en oeuvre dans le cas où le débit des données d'entrée est important. En effet, les calculs effectués dans la boucle de régulation, particulièrement le calcul du pas de quantification, ne peut pas être réalisé par un circuit ASIC. La mise en oeuvre nécessite donc l'utilisation d'un microprocesseur. Or les microprocesseurs ayant des fréquences d'horloge nettement plus limitées que celle d'un circuit de type ASIC, cela limite fortement la réalisation d'un tel type de régulation.

Le but de l'invention est donc de palier ces différents inconvénients de l'état de la technique.

Pour cela, un premier objet de la présente invention est un dispositif de traitement pour la transmission de données numériques, notamment de données images, dans un canal de transmission, comportant :

- Un moyen de compression des données, composé d'un moyen de décorrélation, d'un moyen de quantification et d'un moyen de codage,
- Un moyen de régulation fournissant au moyen de quantification, au moins un paramètre de quantification.

Ce dispositif se caractérise en ce que le moyen de régulation possède comme entrée des données décorrélées provenant du moyen de décorrélation, ainsi qu'une consigne.

Le dispositif peut disposer en outre d'un moyen de mémorisation disposé en sortie du moyen de compression.

L'invention a aussi pour objet un procédé de traitement pour la transmission de données numériques, notamment de données images, dans un canal de transmission, comportant les étapes ordonnées suivantes :

- Décorrélation des données,
- Calcul d'un paramètre de quantification à partir d'une consigne et des données décorrélées,
- Quantification de ces données décorrélées, selon ce paramètre de quantification,
- Codage des données quantifiées à l'étape précédente.

Le procédé peut en outre mettre en oeuvre une étape terminale de mémorisation des données dans un moyen de mémorisation.

Selon une mise en oeuvre particulière de l'invention, le paramètre de quantification dispose en outre d'informations mesurées provenant de ce moyen de mémorisation.

Par ailleurs, selon différentes mises en oeuvres particulières, la consigne peut être un débit de consigne ou bien une qualité de consigne.

D'autres caractéristiques de l'invention vont être étudiées à la lumière de la description qui va suivre de plusieurs mises en oeuvre possibles en relation avec les figures annexées.

La figure 1 représente schématiquement un dispositif de compression d'images, classiquement utilisé dans le contexte de l'invention.

Les figures 2 et 3 illustrent des solutions connues dans l'état de l'art.

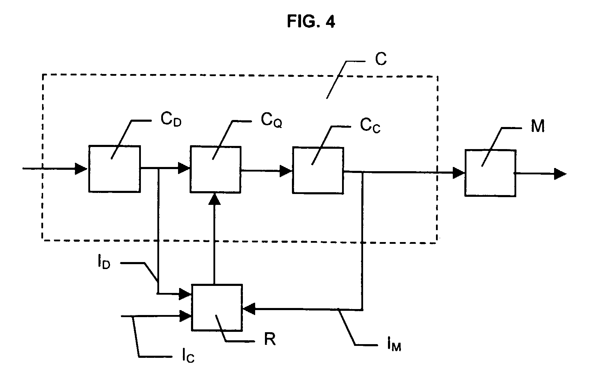

La figure 4 illustre, quant à elle, le dispositif selon l'invention.

**1) Le moyen de compression (C)**

Le moyen de compression C utilisé par le dispositif selon l'invention est du type communément appelé codage par transformée. Un tel schéma de compression se décompose classiquement en trois modules : un module de décorrélation ($C_D$), un module de quantification ($C_Q$) et un module de codage ($C_C$).

Le rôle du module de décorrélation $C_D$ peut être vu comme une mise en forme des données, afin qu'elles soient traitées avec le maximum d'efficacité par le module de quantification $C_Q$. Dans le cas d'un moyen de compression conforme aux préconisations du groupe de travail JPEG (Joint *Photographic Expert* Group), la décorrélation des données est effectuée par une transformation en cosinus discrète (ou DCT pour *Discrete Cosine Transform,* en anglais).

D'autres transformées mathématiques sont utilisables, et notamment la transformée en ondelettes qui présente souvent des performances meilleures.

Le rôle du module de quantification $C_Q$ est de réduire l'information à transmettre en quantifiant le signal décorrélé. À la suite de cette opération qui a réduit l'alphabet sur lequel est décrit le signal, le module de codage $C_C$ code les valeurs quantifiées en affectant un code de longueur variable qui est fonction de la probabilité d'apparition des différents symboles de l'alphabet. Un exemple de méthode pour effectuer ce codage est le codage dit de Huffman, présenté dans l'article intitulé "*A method for the construction of minimum redundancy* codes" de D. A. Huffman, paru dans *"Proceedings of the Institute of Electronics and Radio* Engineers, en 1952.

**2) Données décorrélées $I_D$**

Les données décorrélées (ou coefficients) $I_D$ issues du moyen de décorrélation ($C_D$) sont traitées en zone. En effet, dans le cas où le système mettant en oeuvre le dispositif selon l'invention est un satellite d'observation, les données d'entrée forment une image numérique d'une largeur de quelques milliers de pixels, et d'une longueur théoriquement infinie puisque le capteur ne cesse d'acquérir des données. Par conséquent, on divise le flux de données issu du capteur en zone, et on effectue la régulation sur chacune de ces zones.

La division en zones des données décorrélées $I_D$ dépend de la nature du procédé de décorrélation. Ainsi, dans le cas où le moyen de décorrélation $C_D$ est basé sur une transformée en ondelettes, les zones seront préférentiellement des bandes de l'image. Dans le cas où le moyen de décorrélation met en oeuvre une transformée en cosinus, les zones seront alors préférentiellement des lignes de blocs.

Il est néanmoins à noter que dans le cas de la régulation de qualité, l'invention peut aussi être appliquée au cas de petites images sur lesquelles la totalité de l'information peut être mémorisée. En ce cas, on peut considérer que l'image ne possède qu'une seule zone, sur laquelle sont effectués les traitements suivants.

**3) Moyen de mémorisation M**

Dans la mesure où le moyen de régulation R met en oeuvre un modèle du comportement du moyen de compression C, il existe une légère variation du débit en sortie du système régulé.

Dans le cadre d'un système d'observation embarqué sur satellite, le canal de transmission est à débit constant. Aussi, il convient de convertir ce débit légèrement variable en débit constant, au moyen d'une mémoire M, ayant une fonction d'intégrateur.

Il est important de noter que cette mémoire est optionnelle, dans la mesure où l'invention est applicable à des systèmes n'ayant pas cette contrainte sur le canal de transmission. Par ailleurs, la qualité de la régulation selon l'invention fait que la variabilité du débit en sortie du moyen de compression C, est très faible en comparaison des solutions de l'état de l'art. Par exemple, le rapport des variabilités entre la solution conforme à l'invention et la solution présentée dans le brevet français 2 707 070 peut atteindre un facteur supérieur à 100, en fonction de la nature des zones d'images dans lequel il est calculé.

De plus, même dans le cas où cette mémoire M est indispensable afin d'avoir une variabilité nulle en sortie du dispositif, il est à noter que celle-ci peut être de taille beaucoup plus réduite, du fait de la faible variabilité du débit d'entrée. Cette diminution peut être primordiale, notamment dans le cas d'un système embarqué.

Du fait de la qualité de prédiction du modèle utilisé, on peut, de plus, calculer *a priori* et de manière théorique la taille maximale de cette mémoire pour un débit de sortie fixé.

**4) Régulation de débit**

Le dispositif selon l'invention peut être utilisé soit pour effectuer une régulation de débit, soit pour effectuer une régulation de qualité. Dans le premier cas, l'information de consigne $I_C$ est un débit de consigne, noté Rc par la suite.

L'objectif du moyen de régulation R est alors de fournir au moyen de quantification $C_Q$ un paramètre de quantification PQ en fonction du débit de consigne $R_c$ et des informations $I_D$ issues du moyen de décorrélation $C_D$. Ce paramètre de quantification peut être recalculé pour chaque zone de coefficients.

Pour chaque zone de coefficients $I_D$ issus du moyen de décorrélation $C_D$, le moyen de régulation peut procéder à un tri en ordonnant les coefficients suivant l'amplitude décroissante de leur valeur absolue. Par exemple, ces coefficients peuvent être stockés et triés dans un tableau $I_D[i]$, i variant de 1 au cardinal de la zone, le cardinal de la zone étant le nombre de coefficients qu'elle contient.

Une autre façon de faire, qui a l'avantage de diminuer le temps de calcul et donc d'améliorer la mise en oeuvre de l'invention, consiste à s'affranchir du tri en construisant un histogramme du module des coefficients et en calculant le pas de quantification lié au débit souhaité avec un algorithme explicité ultérieurement. Ceci présente le grand avantage de ne pas nécessiter de microprocesseur et d'être implantable en ASIC.

## 4.1) Régulation de débit en boucle ouverte

Selon une mise en oeuvre particulière de l'invention, le paramètre de quantification PQ est un pas de quantification déterminé par l'expression suivante :

$$PQ = \alpha \cdot |I_D(\beta \cdot R_C)|$$

dans laquelle $\alpha$ et $\beta$ sont deux paramètres qui sont préférentiellement compris dans les fourchettes suivantes : $\alpha \in [1;2]$ et

$$\beta \in \left[ \frac{1}{10} ; \frac{1}{3} \right].$$

$|I_D(\beta \cdot R_C)|$ est le module du coefficient trié d'indice $\beta \cdot R_c$.

Un exemple de réalisation pratique consiste à stocker les modules des coefficients triés dans un tableau unidimensionnel dont on vient prendre l'élément correspondant à l'indice $\beta \cdot R_c$.

Comme indiqué précédemment, une autre façon de faire consiste à construire l'histogramme $H$ des modules des coefficients $I_{D_{min}} \le I_D \le I_{D_{max}}$ , et PQ lié au débit $R_C$ est obtenu dès que

$$\sum_{I=\frac{PQ}{\alpha}}^{I_{D_{max}}} H(i)$$

devient égal à $\lfloor R_c \cdot \beta \rfloor$, c'est-à-dire à la partie entière du produit $\beta \cdot R_c$.

Les valeurs des paramètres $\alpha$ et $\beta$ dépendent du procédé de décorrélation mis en oeuvre par le moyen de décorrélation $C_D$. Préférentiellement, ces valeurs sont choisies selon le tableau suivant :

|  | $\alpha$ | $\beta$ |
|---|---|---|
| Transformée en cosinus | 2 | $\frac{1}{5,5}$ |
| Transformée en ondelettes | 1 | $\frac{1}{6,5}$ |

Il est toutefois à noter que ces valeurs ne sont données qu'au titre d'une mise en oeuvre particulière, quoique préférentielle, de l'invention. Il est par ailleurs évident que l'invention est susceptible d'être étendue à d'autres types de procédé de décorrélation. Pour chaque nouveau procédé de décorrélation, il convient juste de déterminer un nouveau couple de paramètres $\alpha$, $\beta$ dont les valeurs optimales peuvent être déterminées de façon expérimentale.

## 4.2) Régulation de débit en boucle fermée

Selon un autre mode de réalisation de l'invention, le moyen de régulation R dispose en outre d'informations mesurées $I_M$ provenant du moyen de mémorisation M. Cette information permet de corriger le modèle en prenant en compte le taux de remplissage de la mémoire M. Ainsi, lorsque la mémoire est trop remplie, on peut augmenter le taux de compression en modifiant le paramètre de quantification PQ. Inversement, lorsque la mémoire se vide trop, on peut diminuer le taux de compression.

Plus précisément, ces informations $I_M$ peuvent mesurer l'écart qui existe entre le taux de remplissage de la mémoire M et un taux nominal (par exemple 50%). Selon une mise en oeuvre particulière, le paramètre de quantification PQ est un pas de quantification déterminé par l'expression :

$$PQ = \alpha \cdot \left| I_D\left(\beta \cdot \left(R_C + \frac{I_M}{k \cdot Z}\right)\right) \right|,$$

dans laquelle $\alpha$ et $\beta$ sont deux paramètres qui sont préférentiellement compris dans les fourchettes suivantes : $\alpha \in [1; 2]$ et

$$\beta \in \left[\frac{1}{10}; \frac{1}{3}\right].$$

Le paramètre k est un facteur d'amortissement, et Z est le cardinal de la zone de coefficients. De la même façon que précédemment, les valeurs des paramètres $\alpha$ et $\beta$ dépendent du procédé de décorrélation mis en oeuvre par le moyen de décorrélation $C_D$, et sont préférentiellement choisies selon le tableau suivant :

|  | $\alpha$ | $\beta$ |
|---|---|---|
| Transformée en cosinus | 2 | $\frac{1}{5,5}$ |
| Transformée en ondelettes | 1 | $\frac{1}{6,5}$ |

Le facteur d'amortissement k peut aussi être déterminé de façon expérimentale. Classiquement, on peut choisir k dans l'intervalle [1; 6].

Comme dans le cas de la régulation en boucle ouverte une façon plus efficace de calculer PQ pour envisager une implantation ASIC est de construire l'histogramme $H$ des modules des coefficients $I_{Dmin} \leq I_D \leq I_{Dmax}$ et PQ lié au débit $R_C$ est obtenu dès que

$$\sum_{i=\frac{PQ}{\alpha}}^{I_{Dmax}} H(i)$$

devient égal à $[R_c \cdot \beta \rfloor$.

**5) Régulation de qualité**

Comme il a été dit précédemment, le dispositif selon l'invention peut aussi être utilisé pour effectuer de la régulation de qualité. En ce cas, l'information de consigne $I_C$ est une qualité de consigne notée $Q_C$ par la suite, et l'objectif pour le moyen de régulation R est de fournir, pour chaque zone de coefficients, le paramètre de quantification PQ permettant de réaliser cette qualité de consigne.

Selon une mise en oeuvre particulière, le pas de quantification PQ est un pas de quantification qui peut être déterminé par une équation similaire à celle donnée pour la régulation de débit : $PQ = \alpha |I_D(\beta \cdot R_0)|$, dans laquelle $\alpha$ et $\beta$ sont deux paramètres qui sont préférentiellement compris dans les fourchettes suivantes : $\alpha \in [1; 2]$ et

$$\beta \in \left[\frac{1}{10}; \frac{1}{3}\right].$$

Dans cette équation, $R_0$ est le débit à atteindre pour obtenir la qualité de consigne $Q_C$.

La valeur du débit $R_0$ est obtenue à partir de la qualité de consigne $Q_c$ en appliquant l'égalité :

$$\xi - 10 \cdot Log_{10}\left(\sum_{k=\lfloor \beta \cdot R_0 \rfloor + 1}^{Z} |I_D(k)|^2\right) = Q_c$$

dans laquelle $\xi$ dépend de la nature de la consigne de qualité.

Par exemple, si la consigne de qualité $Q_c$ est un rapport signal à bruit crête (ou PSNR pour *Peak* Signal to Noise Ratio, en anglais), alors $\xi$ est donné par l'équation suivante :

$$\xi = 10 Log_{10} \frac{Z\left(2^A - 1\right)^2}{\chi}$$

Si $Q_c$ est un rapport signal à bruit (ou SNR pour Signal to Noise Ratio, en anglais), alors $\xi$ peut être donné par une des équations :

$$\xi = 10 \cdot Log_{10} \frac{V}{\chi} \text{ ou } \xi = 10 \cdot Log_{10} \frac{E}{\chi}$$

dans lesquelles V est la variance de l'image ou de la zone traitée de l'image et E son énergie. *A* est le nombre de bits sur lequel les données d'entrée sont codées, et Z le cardinal de la zone d'image ou de l'image traitée. Enfin $\chi$ est un paramètre, préférentiellement tel que $\frac{1}{2} \le \chi \le 3$.

On peut définir l'énergie E d'une image I comportant L lignes et C colonnes, et donc Z=LxC points, par l'équation

$$E = \frac{1}{Z}\sum_{i=0}^{C-1}\sum_{j=0}^{L-1} I(i,j)^2 \ ,$$

dans laquelle I(i,j) représente la valeur du point de coordonnées i, j.

De la même façon, on peut définir la variance V de l'image I par l'équation

$$V = \frac{Z}{1-Z}\bar{I}^2 + \frac{1}{Z-1}\sum_{i=0}^{C-1}\sum_{j=0}^{L-1} I(i,j)^2 \ ,$$

dans laquelle $\bar{I}$ est la moyenne de l'image.

Les valeurs des paramètres $\alpha$, $\beta$ et $\chi$ dépendent du procédé de décorrélation mis en oeuvre par le moyen de décorrélation $C_D$. Préférentiellement, ces valeurs sont choisies selon le tableau suivant :

| | $\alpha$ | $\beta$ | $\chi$ |
|---|---|---|---|
| Transformée en cosinus | 2 | $\frac{1}{5,5}$ | $1 + \frac{1}{2}$ |
| Transformée en ondelettes | 1 | $\frac{1}{6,5}$ | $1 + \frac{1}{12}$ |

## Revendications

1. Dispositif de traitement pour la transmission de données numériques d'images, dans un canal de transmission, comportant un moyen de compression (C) desdites données, composé d'un moyen de décorrélation ($C_D$), d'un moyen de quantification ($C_Q$) et d'un moyen de codage ($C_C$), et un moyen de régulation (R) fournissant audit moyen de quantification ($C_Q$) au moins un paramètre de quantification (PQ), caractérisé en ce que ledit moyen de régulation possède comme entrée des données décorrélées ($I_D$) provenant dudit moyen de décorrélation ($C_D$)

et une consigne ($I_C$).

**2.** Dispositif selon la revendication 1, comportant en outre un moyen de mémorisation (M) disposé en sortie dudit moyen de compression (C).

**3.** Dispositif selon la revendication 2, caractérisé en ce que ledit moyen de régulation (R) dispose en outre en entrée des informations mesurées ($I_M$) provenant dudit moyen de mémorisation (M).

**4.** Dispositif selon l'une des revendications précédentes, caractérisé en ce que lesdites données décorrélées ($I_D$) sont organisées en zones, et en ce qu'au sein de chaque zone, ledit moyen de régulation (R) procède préalablement à un tri desdites données décorrélées ($I_D$) par ordre d'amplitudes décroissantes de leur valeur absolue,

**5.** Dispositif selon l'une des revendications précédentes, caractérisé en ce que ladite consigne ($I_C$) est un débit de consigne (Rc).

**6.** Dispositif selon les revendications 4 et 5 prises conjointement, caractérisé en ce que ledit au moins un paramètre de quantification (PQ) est un pas de quantification déterminé par l'expression $PQ = \alpha - |I_D(\beta \cdot R_C)|$, pour chacune desdites zones, $\alpha$ et $\beta$ étant des paramètres positifs.

**7.** Dispositif selon les revendications l'une des revendications 1 à 3, prise conjointement avec la revendication 5, caractérisé en ce que un histogramme (H) est construit par ledit moyen de régulation (R) à partir desdites données décorrélées ($I_D$) et en ce que ledit au moins un paramètre de quantification (PQ) est un pas de quantification déterminé par l'expression

$$\sum_{i=\frac{PQ}{\alpha}}^{I_{D_{max}}} H(i) = \lfloor R_c \cdot \beta \rfloor .$$

**8.** Dispositif selon les revendications 3, 4 et 5 prises conjointement, caractérisé en ce que ledit au moins un paramètre de quantification (PQ) est un pas de quantification déterminé par l'expression

$$PQ = \alpha \cdot \left| I_D \left( \beta \cdot \left( R_C + \frac{I_M}{k \cdot Z} \right) \right) \right|$$

pour chacune desdites zones, $\alpha$, $\beta$ et k étant des paramètres positifs, Z le cardinal de l'ensemble desdites données décorrélées ($I_D$) sur ladite zone et lesdites informations mesurées ($I_M$) sont l'écart entre le niveau de remplissage dudit moyen de mémorisation (M) et un niveau nominal.

**9.** Dispositif selon l'une des revendications 6 à 8, caractérisé en ce que ledit moyen de décorrélation met en oeuvre une transformée en cosinus discrète, et en ce que a vaut environ 2 et $\beta$ vaut environ $\frac{1}{5,5}$.

**10.** Dispositif selon l'une des revendications 6 à 8, caractérisé en ce que ledit moyen de décorrélation met en oeuvre une transformée en ondelettes et en ce que $\alpha$ vaut environ 1 et $\beta$ vaut environ $\frac{1}{6,5}$.

**11.** Dispositif selon l'une des revendications 1 à 4, caractérisé en ce que ladite consigne ($I_C$) est une qualité de consigne ($Q_C$).

**12.** Dispositif selon la revendication précédente, caractérisé en ce que ledit au moins un paramètre de quantification (PQ) est un pas de quantification déterminé par l'expression $PQ = \alpha \cdot |I_D(\beta \cdot R_0)|$ pour chacune desdites zones, dans laquelle $R_0$ est un débit à atteindre pour obtenir ladite qualité de consigne ($Q_C$), et $\alpha$ et $\beta$ sont des paramètres positifs.

**13.** Procédé de traitement pour la transmission de données numériques, notamment de données images, dans un canal de transmission, comportant les étapes ordonnées suivantes :

- Décorrélation desdites données,
- Calcul d'un paramètre de quantification à partir d'une consigne et des données décorrélées,
- Quantification desdites données décorrélées, selon ledit paramètre de quantification,
- Codage des données quantifiées à l'étape précédente.

**14.** Procédé selon la revendication précédente, comportant en outre une étape de mémorisation des données en sortie de l'étape de codage dans un moyen de mémorisation (M).

**15.** Procédé selon la revendication précédente, caractérisé en ce que le calcul dudit paramètre de quantification (PQ) dépend en outre d'informations mesurées ($I_M$) provenant dudit moyen de mémorisation (M).

**16.** Procédé selon l'une des revendications 13 à 15, caractérisé en ce que lesdites données décorrélées ($I_D$) sont organisées en zones, et en ce qu'au sein de chaque zone, ladite étape de calcul comporte une étape préalable de tri desdites données décorrélées ($I_D$) par ordre d'amplitudes décroissantes de leur valeur absolue.

**17.** Procédé selon l'une des revendications 13 à 16, caractérisé en ce que ladite consigne ($I_C$) est un débit de consigne (Rc).

**18.** Procédé selon les revendications 16 et 17 prises conjointement, caractérisé en ce que ledit paramètre de quantification (PQ) est un pas de quantification déterminé par l'expression PQ = $\alpha \cdot |I_D(\beta \cdot R_C)|$, pour chacune desdites zones, $\alpha$ et $\beta$ étant des paramètres positifs.

**19.** Procédé selon l'une des revendications 13 à 15, prise conjointement avec la revendication 16, caractérisé en ce que un histogramme (H) est construit par ledit moyen de régulation (R) à partir desdites données décorrélées ($I_D$) et en ce que ledit paramètre de quantification (PQ) est un pas de quantification déterminé par l'expression

$$\sum_{i=\frac{PQ}{\alpha}}^{I_{D_{\max}}} H(i) \geq \left\lfloor R_c \cdot \beta \right\rfloor .$$

**20.** Procédé selon les revendications 15, 16 et 17 prises conjointement, caractérisé en ce que ledit paramètre de quantification (PQ) est un pas de quantification déterminé par l'expression

$$PQ = \alpha \cdot \left| I_D \left( \beta \cdot \left( R_C + \frac{I_M}{k \cdot Z} \right) \right) \right|$$

pour chacune desdites zones, $\alpha$, $\beta$ et k étant des paramètres positifs, Z le cardinal de l'ensemble desdites données décorrélées ($I_D$) sur ladite zone et lesdites informations mesurées ($I_M$) sont l'écart entre le niveau de remplissage dudit moyen de mémorisation (M) et un niveau nominal.

**21.** Procédé selon l'une des revendications 18 à 20, caractérisé en ce que ladite étape de décorrélation met en oeuvre une transformée en cosinus discrète, et en ce que a vaut environ 2 et $\beta$ vaut environ $\frac{1}{5,5}$.

**22.** Procédé selon l'une des revendications 18 à 20, caractérisé en ce que ladite étape de décorrélation met en oeuvre une transformée en ondelettes et en ce que *a* vaut environ 1 et $\beta$ vaut environ $\frac{1}{6,5}$.

**23.** Procédé selon l'une des revendications 13 à 16, caractérisé en ce que ladite consigne ($I_C$) est une qualité de consigne ($Q_C$).

**24.** Procédé selon la revendication précédente, caractérisé en ce que ledit paramètre de quantification (PQ) est un pas de quantification déterminé par l'expression

$$PQ = \alpha \cdot \left| I_D \left( \beta \cdot R_0 \right) \right|$$

pour chacune desdites zones, dans laquelle $R_0$ est un débit à atteindre pour obtenir ladite qualité de consigne ($Q_C$), et $\alpha$ et $\beta$ sont des paramètres positifs.

## FIG. 1

```
  ┌───┐1    ┌───┐2    ┌───┐3    ┌───┐4    ┌───┐5
  │   │ →   │   │ →   │   │ →   │   │ →   │   │
  └───┘     └───┘     └───┘     └───┘     └───┘
```

## FIG. 2

$C_1$     $B_1$     $M_1$

$R_1$

## FIG. 3

$C_2$     $B_2$     $M_2$

$t$

$E$

$L_B$

Par

$R_2$

**FIG. 4**

| | Office européen des brevets | RAPPORT DE RECHERCHE EUROPEENNE | Numéro de la demande EP 00 40 0688 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>A | EP 0 631 443 A (CENTRE NAT ETD SPATIALES) 28 décembre 1994 (1994-12-28)<br>* page 3, ligne 46 - page 4, ligne 48 *<br><br>* page 6, ligne 6 - ligne 7 *<br>* page 6, ligne 23 - ligne 54; revendications; figure 6 *<br>--- | 1-3,5,<br>13-15,17<br>4,6-12,<br>16,18-24 | H04N7/30 |
| A | EP 0 239 076 A (FUJITSU LTD ;KOKUSAI DENSHIN DENWA CO LTD (JP); NIPPON ELECTRIC CO) 30 septembre 1987 (1987-09-30)<br>* abrégé *<br>* colonne 2, ligne 10 - colonne 3, alinéa 1; figure 1 *<br>* colonne 8, ligne 42 - colonne 10, alinéa 1 *<br>* revendications *<br>--- | 1-3,5,<br>13-15,17 | |
| A | EP 0 514 663 A (IBM) 25 novembre 1992 (1992-11-25)<br>* page 4, ligne 28 - page 5, ligne 20; revendications; figures *<br>--- | 1-24 | DOMAINES TECHNIQUES RECHERCHES (Int.Cl.7)<br><br>H04N |
| A | EP 0 684 738 A (CANON KK) 29 novembre 1995 (1995-11-29)<br>* abrégé *<br>* page 2, ligne 50 - page 3, ligne 4 *<br>* page 4, ligne 1 - page 6, ligne 45; figure 1 *<br>--- | 1-24 | |
| A | EP 0 478 230 A (AMERICAN TELEPHONE & TELEGRAPH) 1 avril 1992 (1992-04-01)<br>* abrégé *<br>* colonne 2, ligne 38 - colonne 3, ligne 4 *<br>* colonne 4, alinéa 4 - colonne 7, alinéa 2; revendications; figures *<br>--- | 1-24 | |

-/--

Le présent rapport a été établi pour toutes les revendications

| Lieu de la recherche | Date d'achèvement de la recherche | Examinateur |
|---|---|---|
| BERLIN | 7 juin 2000 | Gries, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets** **RAPPORT DE RECHERCHE EUROPEENNE**

Numéro de la demande

EP 00 40 0688

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 745 179 A (SENDA YUZO) 28 avril 1998 (1998-04-28) * colonne 3, ligne 53 - colonne 4, ligne 8 * --- | 1-24 | |
| A | EP 0 540 961 A (IBM) 12 mai 1993 (1993-05-12) * page 6, ligne 56 - page 7, ligne 16 * * page 7, ligne 52 - page 11, ligne 45 * * page 14, ligne 11 - page 16, ligne 19 * --- | 1-24 | |
| A | US 5 598 213 A (CHUNG TAE-YUN ET AL) 28 janvier 1997 (1997-01-28) * figures 1,3 * --- | 1-24 | |
| A | EP 0 741 497 A (NIPPON ELECTRIC CO) 6 novembre 1996 (1996-11-06) * abrégé; revendications * --- | 1-24 | |
| A | US 5 134 476 A (PURI ATUL ET AL) 28 juillet 1992 (1992-07-28) * abrégé * ----- | 1-24 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| BERLIN | 7 juin 2000 | Gries, T |

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 00 40 0688

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2000

| Document brevet cité au rapport de recherche | | Date de publication | Membre(s) de la famille de brevet(s) | | Date de publication |
|---|---|---|---|---|---|
| EP 0631443 | A | 28-12-1994 | FR | 2707070 A | 30-12-1994 |
| | | | AT | 175834 T | 15-01-1999 |
| | | | DE | 69415874 D | 25-02-1999 |
| | | | DE | 69415874 T | 01-07-1999 |
| EP 0239076 | A | 30-09-1987 | JP | 62222783 A | 30-09-1987 |
| | | | CA | 1258534 A | 15-08-1989 |
| | | | DE | 3788667 D | 17-02-1994 |
| | | | DE | 3788667 T | 28-04-1994 |
| | | | US | 4734767 A | 29-03-1988 |
| EP 0514663 | A | 25-11-1992 | JP | 2501999 B | 29-05-1996 |
| | | | JP | 5145773 A | 11-06-1993 |
| | | | US | 5301242 A | 05-04-1994 |
| EP 0684738 | A | 29-11-1995 | JP | 7322252 A | 08-12-1995 |
| EP 0478230 | A | 01-04-1992 | US | 5038209 A | 06-08-1991 |
| | | | CA | 2050102 A,C | 28-03-1992 |
| | | | DE | 69124760 D | 03-04-1997 |
| | | | DE | 69124760 T | 12-06-1997 |
| | | | JP | 2509770 B | 26-06-1996 |
| | | | JP | 4288776 A | 13-10-1992 |
| | | | KR | 9504118 B | 25-04-1995 |
| US 5745179 | A | 28-04-1998 | JP | 2551305 B | 06-11-1996 |
| | | | JP | 6197329 A | 15-07-1994 |
| | | | US | 5532745 A | 02-07-1996 |
| EP 0540961 | A | 12-05-1993 | US | 5231484 A | 27-07-1993 |
| | | | CA | 2077058 A,C | 09-05-1993 |
| | | | CN | 1072554 A,B | 26-05-1993 |
| | | | DE | 69230704 D | 30-03-2000 |
| | | | EP | 0959627 A | 24-11-1999 |
| | | | EP | 0959628 A | 24-11-1999 |
| | | | JP | 2818340 B | 30-10-1998 |
| | | | JP | 5252507 A | 28-09-1993 |
| | | | KR | 9607264 B | 29-05-1996 |
| US 5598213 | A | 28-01-1997 | JP | 2843523 B | 06-01-1999 |
| | | | JP | 7274172 A | 20-10-1995 |
| EP 0741497 | A | 06-11-1996 | JP | 2899431 B | 02-06-1999 |
| | | | JP | 4267683 A | 24-09-1992 |
| | | | JP | 2899432 B | 02-06-1999 |
| | | | JP | 4267684 A | 24-09-1992 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**          EP 00 40 0688

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2000

| Document brevet cité au rapport de recherche | Date de publication | Membre(s) de la famille de brevet(s) | Date de publication |
|---|---|---|---|
| EP 0741497 A | | JP 2669963 B | 29-10-1997 |
| | | JP 4356872 A | 10-12-1992 |
| | | DE 69222332 D | 30-10-1997 |
| | | DE 69222332 T | 29-01-1998 |
| | | DE 69230268 D | 09-12-1999 |
| | | DE 69230268 T | 13-04-2000 |
| | | EP 0500077 A | 26-08-1992 |
| | | US 5245427 A | 14-09-1993 |
| US 5134476 A | 28-07-1992 | AUCUN | |

EPO FORM P0460